# EUROPÄISCHE PATENTSCHRIFT

(11) **EP 1 782 147 B1**
(45) Veröffentlichungstag und Bekanntmachung des Hinweises auf die Patenterteilung: **21.07.2010**
(21) Anmeldenummer: 05782860.0
(22) Anmeldetag: 23.08.2005
(51) Int. Cl.: G05G 5/04, F16H 59/08

(54) **BETÄTIGUNGSEINRICHTUNG**
CONTROL DEVICE
DISPOSITIF D'ACTIONNEMENT

(30) Priorität: 24.08.2004 DE 102004041087
(43) Veröffentlichungstag der Anmeldung: 09.05.2007
(73) Patentinhaber: ZF Friedrichshafen AG, 88038 Friedrichshafen (DE)
(72) Erfinder: MEYER, Jörg, 49419 Wagenfeld (DE); GIEFER, Andreas, 49448 Lemförde (DE)
(86) Internationale Anmeldenummer: PCT/DE2005/001485
(87) Internationale Veröffentlichungsnummer: WO 2006/021198

(56) Entgegenhaltungen:
- EP-A- 0 961 305
- EP-A- 1 229 272
- DE-A1- 4 205 875
- US-A- 3 995 205

## Beschreibung

Die Erfindung betrifft eine Einrichtung zur Betätigung eines technischen Systems, beispielsweise zur Betätigung der Schaltstufen eines Fahrzeuggetriebes. Eine derartige Einrichtung, gemäß dem Oberbegriff von Patentanspruch 1, ist aus dem Dokument EP 0 961 305 A2 bekannt.

Betätigungseinrichtungen der eingangs genannten Art werden beispielsweise, keineswegs jedoch ausschließlich, in Kraftfahrzeugen zur Betätigung unterschiedlichster Systeme und Funktionen des Kraftfahrzeugs eingesetzt. Zahlreiche Systeme beziehungsweise Funktionen sind bei modernen Kraftfahrzeugen elektrisch betrieben bzw. elektronisch gesteuert. Dies gilt sowohl für komplexe mechanische Baugruppen des Antriebsstrangs wie beispielsweise für Fahrzeuggetriebe, als auch für einfachere Funktionen wie elektrische Sitzverstellung, Scheibenwischerantriebe, für diverse elektronische Geräte im Fahrzeug und dergleichen mehr.

Die ohne mechanische Verbindung auskommende elektrische bzw. elektronische Ansteuerung derartiger Systeme bringt es jedoch mit sich, dass unter Umständen eine nicht eindeutige Zuordnung zwischen der Position eines Betätigungselements und dem Zustand des mittels des Betätigungselements steuerbaren Systems, beispielsweise eines Fahrzeuggetriebes, vorliegt. Dies bedeutet mit anderen Worten, dass der am Betätigungselement gewählte Sollzustand des gesteuerten Systems, beispielsweise des Fahrzeuggetriebes, nicht mit dem tatsächlichen Schaltzustand des Systems bzw. Getriebes übereinstimmt.

Eine derartige Divergenz zwischen den Zuständen eines technischen Systems und dessen Bedienelemente kann unterschiedliche Ursachen haben.

So kann beispielsweise eine fehlerhafte oder nicht funktionierende Erkennung bzw. Detektion der Position des Bedienelements vorliegen, mit der Folge, dass die beispielsweise vom Fahrer am Bedienelement vorgewählte Getriebestufe vom System nicht erkannt und damit der entsprechende Steuerbefehl an das Getriebe nicht abgegeben wurde. Ebensogut vorstellbar ist beispielsweise auch eine fehlerhafte oder nicht funktionierende Übertragung des Steuerbefehls zwischen dem Bedienelement und dem damit gesteuerten System. Bei modernen Kraftfahrzeugen mit den dort eingesetzten, untereinander immer stärker vernetzten komplexen technischen Systemen tritt jedoch auch zunehmend häufig die Situation auf, dass technische Systeme, wie beispielsweise Fahrzeuggetriebe, ihren Betriebs- bzw. Schaltzustand ohne unmittelbare Einwirkung des Fahrers selbsttätig an veränderte Rahmenbedingungen anpassen und verändern. So ist es beispielsweise nicht ungebräuchlich, dass ein by-wire-gesteuertes Fahrzeuggetriebe beim Abstellen des Motors und nach dem Abziehen des Zündschlüssels, oder sobald der Fahrer das Fahrzeug verlässt, selbsttätig die Schaltposition P (Parksperre) einnimmt.

Ein weiteres, lediglich der Veranschaulichung dienendes Beispiel bildet der vergleichsweise einfache Fall, bei dem das gesteuerte System die Scheibenwischanlage eines Fahrzeugs ist. Auch hierbei ist es bereits bekannt, dass sich der Scheibenwischer, beispielsweise bei auftretendem starkem Nebel oder beim Aufkommen von Niederschlägen, aufgrund von entsprechenden Sensorsignalen selbsttätig einschaltet. Dies bedeutet jedoch, dass der Betriebszustand des Scheibenwischers nun möglicherweise nicht mehr mit dem Schaltzustand des Betätigungselements für den Scheibenwischer übereinstimmt.

Das Betätigungselement signalisiert somit fälschlicherweise durch seine unveränderte Position in der Aus-Stellung, dass der Scheibenwischer ausgeschaltet ist, während dieser sich jedoch aufgrund der automatischen Aktivierung tatsächlich in Betrieb befindet. Wenn die tatsächliche Betriebsstellung im Fall des Scheibenwischers auch leicht erkennbar sein mag, so verbleibt doch zumindest das Problem, dass sich das Betätigungselement beim möglicherweise gewünschten manuellen Eingriff in die Scheibenwischerautomatik, also zum Ausschalten des Scheibenwischers jedoch bereits in der Aus-Stellung befindet.

Im Stand der Technik behilft man sich bezüglich derartiger Unvereinbarkeiten teilweise mit rückfedernden Betätigungselementen, die sich nach der Betätigung stets selbsttätig wieder in eine neutrale Mittelstellung zurückstellen, oder teilweise mit äußerst komplizierten Schaltlogiken und entsprechenden Displayanzeigen, die sowohl den momentanen Betriebszustand des gesteuerten Systems darzustellen haben als auch die zur Steuerung notwendigen oder möglichen Bewegungsrichtungen des Betätigungselements anzeigen sollen.

Als Beispiel hierfür kann die Druckschrift EP 1 045 172 B1 angegeben werden, bei der insbesondere bereits anhand der Figuren hervorgeht, dass derartig ausgeführte und gestaltete Bedienkonzepte für technische Systeme am Kraftfahrzeug sicherlich nicht als intuitiv oder gar leicht verständlich bezeichnet werden können. Abgesehen vom mangelnden Bedienkomfort einer so gestalteten Mensch-Maschine-Interaktion können derartig komplizierte Bedienkonzepte ganz offensichtlich auch zu unerwünschten Folgen bei der Konzentration des Fahrers auf das tatsächliche Fahrgeschehen, und somit zu Problemen mit der Fahrsicherheit führen.

Wie leicht ersichtlich ist, stellen die genannten Fälle lediglich Beispiele für die allgemeinere Problematik der Interaktion zwischen Mensch und Maschine im Fall elektronisch gesteuerter Systeme dar, bei welcher die Betätigungselemente nicht mehr mit mechanischen Gestängen oder Wellen, sondern nur noch über elektrische bzw. elektronische Signale mit dem zu steuernden System in Verbindung stehen.

Mit diesem Hintergrund ist es Aufgabe der vorliegenden Erfindung, eine Einrichtung zur elektronischen bzw. allgemein by-wire-Betätigung eines technischen Systems zu schaffen, mit der sich die genannten Nachteile des Standes der Technik überwinden lassen. Insbesondere soll die Betätigungseinrichtung eine ebenso intuitive und leicht verständliche Betätigung des technischen Systems ermöglichen, wie dies bei mechanischen oder elektromechanischen Betätigungselementen wie beispielsweise Knebelschaltern und dergleichen seit jeher der Fall ist. Dabei soll ein wesentlicher Schwerpunkt auch auf der unmittelbaren, intuitiven und unzweideutigen Rückmeldung des Systemzustands bei der Bedienung des entsprechenden Betätigungselements liegen.

Diese Aufgabe wird durch eine Betätigungseinrichtung mit den Merkmalen des Patentanspruchs 1 gelöst. Bevorzugte Ausführungsformen sind Gegenstand der Unteransprüche.

Die erfindungsgemäße Betätigungseinrichtung umfasst in an sich zunächst bekannter Weise ein Betätigungselement mit mindestens zwei Schaltstellungen, wobei die unterschiedlichen Schaltstellungen jeweils mit unterschiedlichen Betriebszuständen des zu steuernden technischen Systems korrespondieren. Die erfindungsgemäße Betätigungseinrichtung ist jedoch keineswegs auf Betätigungselemente mit lediglich zwei Schaltstellungen beschränkt, sondern kann vielmehr eine prinzipiell beliebige Vielzahl an Schaltstellungen aufweisen.

Erfindungsgemäß zeichnet sich die Betätigungseinrichtung dadurch aus, dass das Betätigungselement für sich genommen unbegrenzt rotierbar ist und dass die Betätigungseinrichtung zumindest eine gesteuert verstellbare Anschlageinrichtung aufweist. Die Anschlageinrichtung dient dabei zur veränderlichen Begrenzung des Drehwinkels des Betätigungselements in Abhängigkeit vom Zustand des gesteuerten technischen Systems.

Dies bedeutet mit anderen Worten zunächst einmal, dass das Betätigungselement aufgrund seiner für sich genommen unbegrenzten Rotierbarkeit vorderhand keine definierte Anfangs- und Endposition aufweist. Vielmehr erfolgt die Festlegung der Anfangs- und/oder Endposition des Betätigungselements dynamisch mittels der verstellbaren Anschlageinrichtung, und zwar in Abhängigkeit vom tatsächlichen momentanen Zustand des gesteuerten technischen Systems.

Die prinzipielle Wirkungsweise soll zunächst wieder mit dem einfachen Beispiel der Betätigung das Scheibenwischers verdeutlicht werden. Die Scheibenwischanlage umfasst im Beispielsfall ein Betätigungselement, das unbegrenzt rotierbar ist, beispielsweise einen im Wesentlichen runden Drehknauf. Durch entsprechende Symbolik auf dem Drehknauf oder im Umfeld des Drehknaufes wird signalisiert, dass der Scheibenwischer durch Rechtsdrehen des Drehknaufes eingeschaltet und durch Linksdrehen des Drehknaufs wieder ausgeschaltet wird. Dieses einfache Bedienprinzip ist unmittelbar verständlich und wird vom Fahrer des Kraftfahrzeugs in kürzester Zeit verinnerlicht werden können.

Angenommen, der Scheibenwischer ist zunächst ausgeschaltet. Die erfindungsgemäß verstellbare Anschlagseinrichtung für den Drehknauf ist im ausgeschalteten Zustand des Scheibenwischers durch die Elektronik bzw. Elektromechanik der Betätigungseinrichtung dann so eingestellt, dass sich der Drehknauf mechanisch an seinem linken Anschlag (entsprechend der "Aus"-Stellung) befindet und somit vom Fahrer nur nach rechts gedreht werden kann.

Zum Einschalten des Scheibenwischers wird somit der Drehknauf einfach nach rechts gedreht, bis die Drehbewegung des Drehknaufs wieder durch den rechten Anschlag (entsprechend der "Ein"-Stellung) begrenzt wird. Der Fahrer weiß somit nach wenigen Betätigungsvorgängen intuitiv, dass ein nach rechts bis zum "Ein"-Anschlag gedrehter Drehknauf einem eingeschalteten Scheibenwischer und ein nach links bis zum "Aus"-Anschlag gedrehter Drehknauf einem ausgeschalteten Scheibenwischer entspricht. Diese Art der Betätigung entspricht prinzipiell dem äußerst weit verbreiteten, einfachen Prinzip des Knebelschalters, der sich seit jeher an zahllosen Geräten, angefangen von elektrischen Haushaltsgeräten, über gebräuchliche Schalter am Kraftfahrzeug, bis hinzu sicherheitsrelevanten Schalteinrichtungen beispielsweise in Kraftwerksanlagen wiederfindet.

Wenn sich nun - im vorliegenden Beispiel der Betätigung des Scheibenwischers - der Scheibenwischer aufgrund einsetzenden Niederschlags dank eines am Fahrzeug vorhandenen Regensensors selbsttätig einschaltet, würde bei einem konventionellen Betätigungselement die Übereinstimmung zwischen der Schaltstellung des Betätigungselements und dem Betriebszustand des gesteuerten technischen Systems, hier also des Scheibenwischers, anfgehoben. Wollte nun der Fahrer in die automatische Betätigung des Scheibenwischers eingreifen und diesen manuell wieder ausschalten, so könnte er nicht einfach intuitiv den Scheibenwischer-Drehknauf nach links bis zum "Aus"-Anschlag drehen, da sich der Drehknauf ja nach wie vor unverändert bereits am linken "Aus"-Anschlag befände. Es müsste somit eine separate Möglichkeit zum Eingriff in die Automatik geschaffen werden, die beispielsweise entweder einen zusätzlichen Betätigungsknopf erforderlich machen, oder aber die Verwendung eines Betätigungselements mit diskreten Schaltstellungen verunmöglichen würde. Beides ginge zu Lasten der Ergonomie und würde die erwünschte intuitive Bedienbarkeit des Systems verhindern.

An dieser Stelle setzt die Erfindung ein, bei der der Anschlag, bzw. die beiden Endanschläge des Drehknaufs, in Abhängigkeit des tatsächlichen momentanen Betriebszustands des zu steuernden Systems verändert werden können. Im vorliegenden Beispiel bedeutet dies mit anderen Worten, dass die Betätigungseinrichtung - für den Fall der automatischen Aktivierung des Scheibenwischers bei einsetzendem Regen - die mechanischen Endanschläge des Drehknaufs mittels einer geeigneten Elektromechanik selbsttätig so verstellt, dass der Drehknauf nun nicht mehr nach rechts gedreht werden kann. Vielmehr kann nunmehr nur noch eine Bewegung des Drehknaufs nach links erfolgen, obwohl der Drehknauf sich kurz zuvor noch am linken Anschlag, und somit in der Aus-Stellung, befunden hatte.

Für den Fahrer bedeutet dies, dass er ohne weiteres Nachdenken und ohne Konsultation einer komplizierten Anzeigeeinrichtung wie immer einfach nach dem Drehknauf greifen und diesen, wie zum Ausschalten des Scheibenwischers gewohnt, einfach nach links bis zum "Aus"-Anschlag drehen kann. Aus dem Gesagten ist unmittelbar ersichtlich, dass eine derart intuitive Bedienung technischer Systeme sowohl dem Bedienkomfort in vorteilhafter Weise entgegenkommt als auch potenziellen Sicherheitsrisiken auf Grund zu komplizierter Bedienelemente oder Bedienkonzepte einen wirksamen Riegel vorschiebt.

Zur Verwirklichung der Erfindung ist es dabei zunächst unerheblich, welche konkrete Gestalt das Betätigungselement aufweist, solange eine griffige und sichere Bedienung des Betätigungselements unabhängig von dessen Rotationsstellung möglich ist. Das Betätigungselement wird jedoch bevorzugt im Wesentlichen rotationssymmetrisch ausgeführt sein und insbesondere keine winkelspezifische Form- bzw. Farbkennzeichnung aufweisen. Dadurch wird vermieden, dass der Bediener bzw. beim Kraftfahrzeug der Fahrer eine bestimmte Drehwinkelstellung des Betätigungselements fälschlicherweise mit einem bestimmten Zustand des zu steuernden Systems identifiziert.

Gemäß einer bevorzugten Ausführungsform der Erfindung weist das Betätigungselement eine Anzahl von Rastpositionen auf, die besonders bevorzugt gleichmäßig auf eine volle Umdrehung des Betätigungselements, also auf 360 Winkelgrade verteilt sind. Es hat sich gezeigt, dass Betätigungselemente mit definierten Rastpositionen von der Mehrzahl der Bediener bevorzugt werden, da aufgrund der bei der Betätigung spürbaren Rastpositionen eine definierte taktile Rückmeldung über den Schaltvorgang erfolgt. Dies gilt insbesondere für Betätigungseinrichtungen, die mehr als zwei Schaltpositionen umfassen, und bei denen das zu steuernde System dementsprechend mehr als zwei unterschiedliche Betriebszustände einnehmen kann.

Die Erfindung wird auch verwirklicht unabhängig von der konkreten Ausführung der Anschlageinrichtung, solange sich damit die jeweils gewünschte Drehwinkelbegrenzung des Betätigungselements realisieren lässt. Gemäß einer bevorzugten Ausführungsform der Erfindung weist die Anschlageinrichtung für beide Drehrichtungen des Betätigungselements jeweils einen Anschlag auf, wobei die beiden Anschläge besonders bevorzugt miteinander verbunden, beispielsweise einstückig ausgeführt sind. Auf diese Weise lässt sich eine Drehwinkelbegrenzung für beide Drehrichtungen des Betätigungselements einfach und zuverlässig realisieren, wobei der verbleibende Drehwinkelbereich zwischen den beiden Endanschlägen bei dieser Ausführungsform der Erfindung konstant ist, das Betätigungselement also immer innerhalb eines gleichgroßen Winkelbereichs bewegt werden kann.

Gemäß einer alternativen Ausführungsform der Erfindung sind die beiden Endanschläge der Anschlageinrichtung bzw. die beiden Anschläge für das Betätigungselement separat voneinander steuerbar bzw. verstellbar. Auf diese Weise kann zusätzlich zur erfindungsgemäßen Winkelverstellung des gesamten Drehwinkelbereichs auch noch eine Veränderung der Größe des zulässigen Drehwinkelbereichs in Abhängigkeit vom Betriebszustand des zu steuernden technischen Systems erfolgen. So könnte beispielsweise der mögliche Drehwinkel eines Betätigungselements für ein Kraftfahrzeuggetriebe in Abhängigkeit von der momentanen Fahrtgeschwindigkeit auf diejenigen Fahrstufen reduziert werden, die jeweils ohne Gefährdung der Fahrsicherheit und ohne Gefahr der Beschädigung des Antriebsstrangs tatsächlich eingelegt werden dürfen.

Für die Erfindung ist es ferner auch nicht wesentlich, auf welche Weise der Antrieb der Anschlageinrichtung für das Betätigungselement konkret erfolgt. Gemäß einer bevorzugten Ausführungsform der Erfindung umfasst der Antrieb der Anschlageinrichtung jedoch ein Schneckengetriebe. Ein Schneckengetriebe ist an dieser Stelle vorteilhaft, da es ohne weitere Hilfsmittel selbsthemmend ausgebildet werden und damit die Funktion eines festen Anschlags für das Betätigungselement wirksam erfüllen kann.

Gemäß einer alternativen Ausführungsform erfolgt der Antrieb der Anschlageinrichtung über ein Stirnradgetriebe. Zur Erfüllung der Anschlagfunktion für das Betätigungselement umfasst der Antrieb gemäß dieser Ausführungsform zusätzlich eine Regelungseinrichtung zur motorischen Erzeugung des erforderlichen Gegendrehmoments.

Nach einer weiteren möglichen Ausführungsform der Erfindung ist die Anschlageinrichtung selbst durch einen direkt auf das Betätigungselement wirkenden Getriebemotor gebildet, wobei die Steuerung des Getriebemotors zur Erfüllung der Anschlagfunktion wiederum eine Regelungseinrichtung zur motorischen Erzeugung des erforderlichen-Gegendrehmoments umfasst. Diese Ausführungsform ist insofern vorteilhaft, als sie mechanisch besonders einfach aufgebaut werden kann, insbesondere keine separaten mechanischen Anschläge mehr erfordert.

Zudem ist es auf diese Weise sogar denkbar, unter bestimmten Systemkonstellationen nicht nur die Position bzw. den Abstand der (dann virtuellen) Anschläge, sondern auch die Position des Betätigungselements selbst automatisch zu verändern. So könnte das Betätigungselement beispielsweise gleichzeitig auch die Funktion einer mechanischen Betriebsanzeige übernehmen, und es wäre möglich, nicht rotationssymmetrische Betätigungselemente, insbesondere klassische Knebelschalter und dergleichen, auch bei automatisch beeinflussbaren Systemen einzusetzen.

Nach weiteren Ausführungsformen der Erfindung ist vorgesehen, dass die Betätigungseinrichtung mit einer Anzeigeeinrichtung verbunden ist, beispielsweise mit einer Anzeigeeinrichtung im Bereich des Armaturenbretts, oder dass die Betätigungseinrichtung selbst eine Anzeigeeinrichtung umfasst, die beispielsweise im unmittelbaren Bereich des Betätigungselements angeordnet sein kann. Die Ausführungsformen mit eigener Anzeigeeinrichtung sind vorteilhaft insbesondere bei der Betätigung solcher technischer Systeme, deren Betriebszustand im Unterschied zum eingangs als Beispiel angeführten Scheibenwischer nicht unmittelbar erkennbar ist. Die Anzeigeeinrichtung dient dann beispielsweise dazu, im unmittelbaren Bereich des Betätigungselements, beispielsweise im Bereich eines Drehknaufs zur Steuerung eines Kraftfahrzeuggetriebes, den derzeitigen Schalt- bzw. Betriebszustand des Getriebes zu signalisieren.

Dabei ist es gemäß einer weiteren, bevorzugten Ausführungsform der Erfindung vorgesehen, dass die Anzeigeeinrichtung für jede Schaltstellung ein diskretes, also gesondertes und räumlich separat angeordnetes Anzeigeelement aufweist, wobei die Abstände zwischen den diskreten Anzeigeelementen besonders bevorzugt mit der Winkeldifferenz zwischen den Schaltstellungen bzw. Rastpositionen des Betätigungselements korrespondieren.

Dies bedeutet mit anderen Worten, dass jeder anwählbaren Schaltstellung bzw. Rastposition des Betätigungselements genau ein eigenes Anzeigeelement, beispielsweise eine Leuchtdiode oder dergleichen entspricht, wobei der Abstand der einzelnen Anzeigeelementen bzw. Leuchtfelder voneinander jeweils mit den Winkeldifferenzen zwischen den Schaltstellungen des Betätigungselements übereinstimmt.

Auf diese Weise wird, zusammen mit den erfindungsgemäßen verstellbaren Endanschlägen, vollständig die Funktion und Bedienungsweise des klassischen Knebelschalters nachgebildet, bei dem jeder Schaltposition genau ein definierter Betriebszustand des geschalteten bzw. zu steuernden Systems zugeordnet ist, und bei dem in beiden Drehrichtungen sowohl optisch als auch mechanisch definierte Endstellungen bzw. Endanschläge vorhanden sind. Selbstverständlich wird dabei jedoch gleichzeitig das erfindungsgemäße Prinzip der verstellbaren Endanschläge beibehalten, deren Stellung in Abhängigkeit des tatsächlichen, u.U. selbsttätig veränderten Systemzustands angepasst werden kann, um intuitive Bedienbarkeit wie beschrieben unter allen Systemzuständen zu gewährleisten.

Gemäß einer weiteren Ausführungsform der vorliegenden Erfindung umfasst die Betätigungseinrichtung ferner eine steuerbare Sperreinrichtung zum Blockieren der Drehbeweglichkeit des Betätigungselements. Die Sperreinrichtung ist dabei vorzugsweise so ausgeführt, dass beispielsweise bei stromlosem Zustand des Systems eine vollständige Blockade der Drehbeweglichkeit des Betätigungselements erfolgt. Auf diese Weise kann der Bediener bzw. der Fahrer eines Kraftfahrzeugs sofort und intuitiv erkennen, dass das zu steuernde System bzw. das Fahrzeuggetriebe momentan nicht mehr über das Betätigungselement beeinflusst werden kann.

Nach einer weiteren Ausführungsform der vorliegenden Erfindung umfasst die Betätigungseinrichtung ferner eine mechanische Entriegelung. Diese steht als sog. Override-Funktion für den Fall von Fehlfunktionen des Antriebs der Anschlageinrichtung und/oder des Antriebs der Sperreinrichtung zur Verfügung und ermöglicht dann mittels einer mechanischen Entsperrung der Anschlageinrichtung und/oder der Sperreinrichtung, dass das Betätigungselement im Sinne eines Notbetriebs dennoch bestätigt werden kann.

Im Folgenden wird die Erfindung anhand lediglich Ausführungsbeispiele darstellender Zeichnungen näher erläutert. Dabei zeigt:
- **Fig. 1**: in schematischer isometrischer Darstellung Betätigungselement und Anschlageinrichtung einer Betätigungseinrichtung gemäß der vorliegenden Erfindung;
- **Fig. 2**: in schematischer Darstellung die Betätigungseinrichtung gemäß **Figur 1** in der Seitenansicht;
- **Fig.**: **3** in einer **Figur 2** entsprechenden Darstellung die Betätigungseinrichtung gemäß **Fig. 4** **Figur 1** und **2** in der Draufsicht; in einer **Figur 3** entsprechenden Darstellung und Ansicht die Betätigungseinrichtung gemäß **Figur 1** bis **3** in einer ersten Relativstellung;
- **Fig. 5**: in einer **Figur 3** **und** **4** entsprechenden Darstellung und Ansicht die Betätigungseinrichtung gemäß **Figur 1** bis **4** in einer zweiten Relativstellung;
- **Fig. 6**: in einer **Figur 3** bis **5** entsprechenden Darstellung und Ansicht die Betätigungseinrichtung gemäß **Figur 1** bis 5 in einer dritten Relativstellung;
- **Fig. 7**: in schematischer Darstellung die Betätigungseinrichtung gemäß **Figur 1** bis **6** in einer ersten Schaltstellung in der Draufsicht;
- **Fig. 8**: in einer **Figur 7** entsprechenden Darstellung und Ansicht die Betätigungseinrichtung gemäß **Figur 1** bis **7** in einer zweiten Schaltstellung;
- **Fig. 9**: in isometrischer Darstellung eine weitere Ausführungsform einer Betätigungseinrichtung gemäß der vorliegenden Erfindung; und
- **Fig. 10**: in einer **Figur 9** entsprechenden Darstellung die Betätigungseinrichtung gemäß **Figur 9** mit u.a. entferntem Gehäuse.

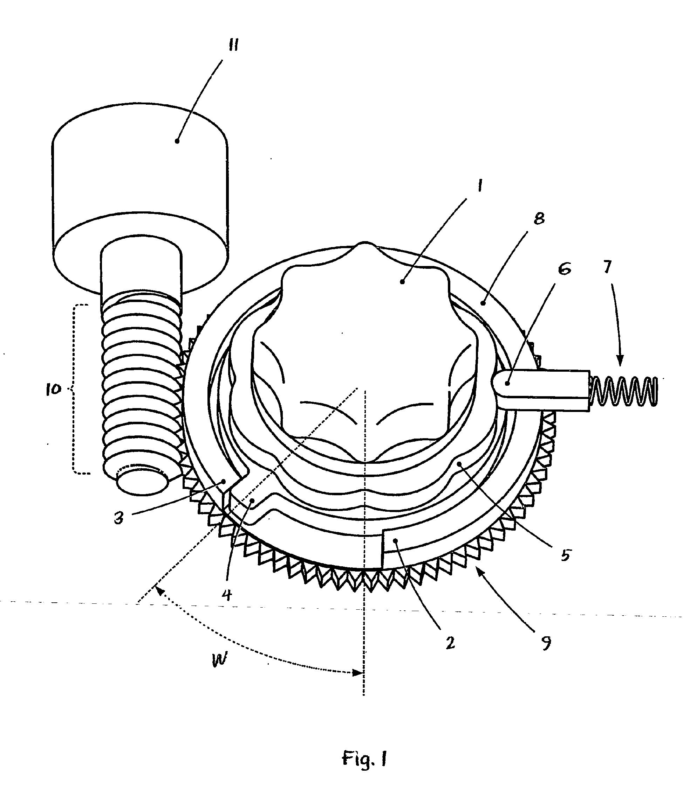

**Figur 1** zeigt in schematischer isometrischer Darstellung das Betätigungselement 1 und die Anschlageinrichtung 2, 3 einer Betätigungseinrichtung gemäß der vorliegenden Erfindung.

Man erkennt zunächst einmal das als rotationssymmetrischer Drehknauf 1 mit Fingermulden ausgebildete Betätigungselement, das zur Steuerung eines nicht dargestellten technischen Systems dient. Lediglich der einfachen Veranschaulichung halber sei einmal mehr angenommen, dass der dargestellte Drehknauf 1 zum Ein und Ausschalten eines Scheibenwischers dienen soll.

Der Drehknauf 1 ist einstückig mit einer ringförmig umlaufenden Rastkontur 5 verbunden, auf der ein federbelastetes Raststück 6 gleitet. Raststück 6 und Druckfeder 7 sind in einer entsprechenden Ausnehmung im hier nicht dargestellten Gehäuse der Betätigungseinrichtung angeordnet. Die Rastkontur 5 sorgt im Sinne der Ergonomie der Betätigungseinrichtung für ein spürbares Einrasten der Drehknaufs 1 bei der manuellen Betätigung. Ebenfalls einstückig mit dem Drehknauf 1 verbunden ist der Anschlagsnocken 4, der im Bereich zwischen den beiden Anschlägen 2 und 3, also innerhalb des Winkelbereichs W hin und her bewegt werden kann.

Die beiden Anschläge 2 und 3 werden durch einen ringförmig umlaufenden, im Winkelbereich W entsprechend ausgesparten Wulst 8 gebildet, der seinerseits wiederum einstückig mit dem Zahnkranz 9 ausgebildet ist. In den Zahnkranz 9 greift die Getriebeschnecke 10 eines elektromotorischen Antriebs 11 dergestalt ein, dass Zahnkranz 9 und Anschläge 2, 3 mittels des elektromotorischen Antriebs 11 um den Drehknauf 1 rotiert und so in beliebige Winkelstellungen verbracht werden können. Aufgrund des mit dem Drehknauf 1 verbundenen Anschlagsnockens 4 kann der Drehknauf 1 sodann stets nur innerhalb des jeweils eingestellten Winkelbereichs W zwischen den beiden Anschlägen 2 und 3 hin und her gedreht werden.

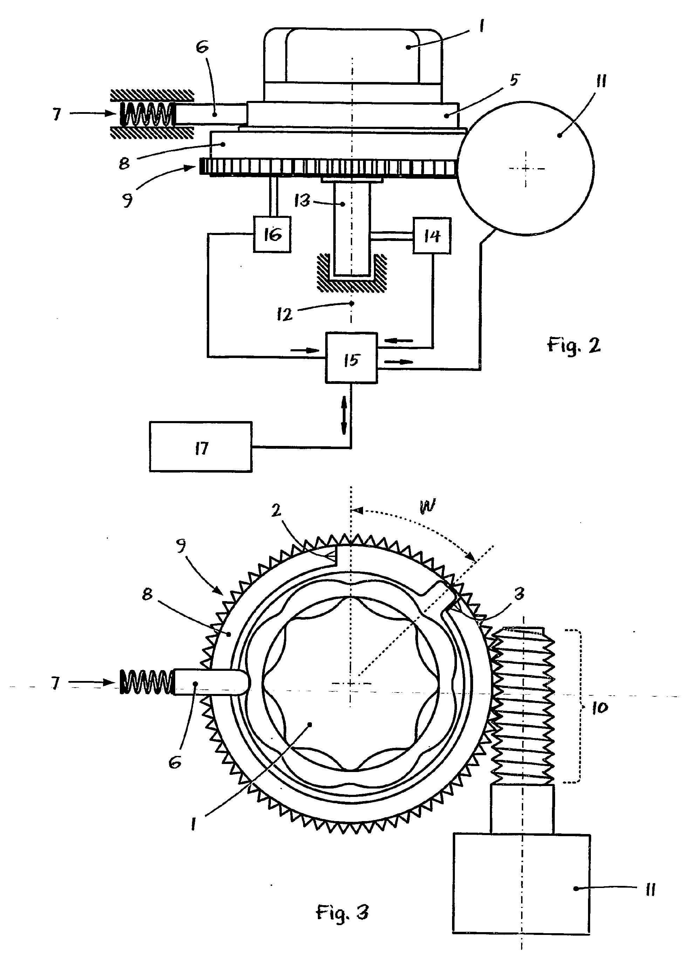

**Figur 2** zeigt in schematisierter Darstellung die Betätigungseinrichtung gemäß **Figur 1** in der Seitenansicht, einschließlich der Schaltlogik sowie in Verbindung mit dem zu steuernden technischen System. **Figur 3** stellt die zugehörige Draufsicht dar.

Man erkennt zunächst wieder den Drehknauf 1 und die Rastkontur 5, auf die das mit der Druckfeder 7 beaufschlagte Raststück 6 einwirkt, sowie den Zahnkranz 9 und den einstückig mit dem Zahnkranz 9 ausgebildeten ringförmigen Wulst 8, dessen Aussparung im Winkelbereich W die beiden Anschläge 2 und 3 ausbildet. Zahnkranz 9 und ringförmiger Wulst 8 lassen sich mittels des elektrischen Antriebs 11 in eine beliebige Winkelstellung um die gemeinsame Drehachse 12 von Drehknauf 1 und Zahnkranz 9 bzw. ringförmigem Wulst 8 verbringen.

Die Winkelposition der Welle 13, die drehfest mit dem Drehknauf 1 verbunden ist, wird über einen Drehwinkelsensor 14 ermittelt und an eine Steuerelektronik 15 gemeldet. Ein weiterer Drehwinkelsensor 16 ermittelt jeweils die momentane Drehwinkelposition des Zahnkranzes 9 bzw. des ringförmigen Wulstes 8 und damit die momentane Winkelposition der beiden Anschläge 2 bzw. 3, und meldet diese ebenfalls an die Steuerelektronik 15.

Die Steuerelektronik 15 steht ferner in Verbindung mit dem zu steuernden System 17, im vorliegenden Erläuterungsbeispiel in Form des Scheibenwischermotors 17. Über eine weitere Leitung ist die Steuerelektronik 15 schließlich auch mit dem elektrischen Antrieb 11 verbunden, mit dem sich Zahnkranz und Anschläge 2, 3 in die erforderliche Winkelposition verdrehen lassen.

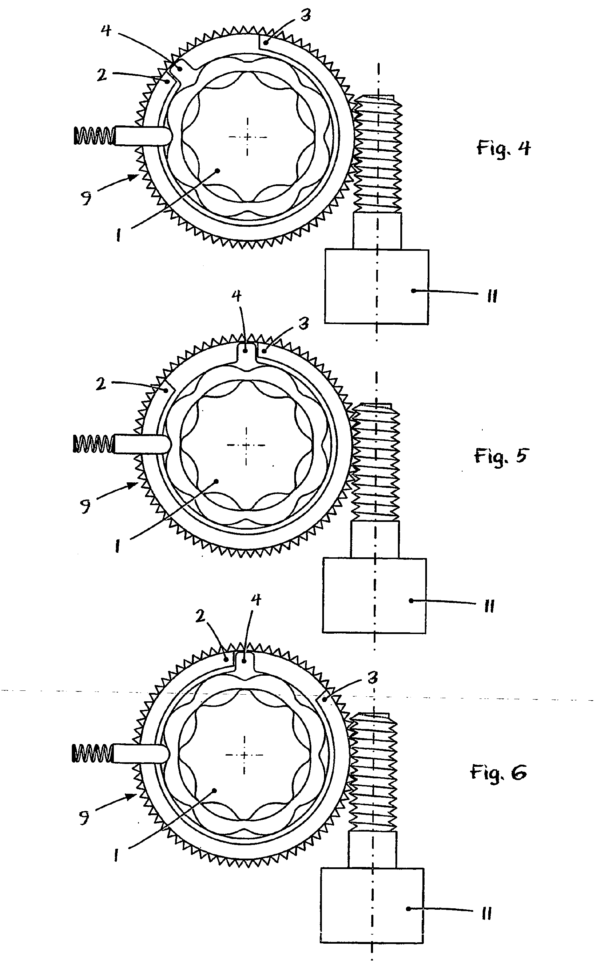

Die prinzipielle Funktion der erfindungsgemäßen Betätigungseinrichtung soll im Folgenden anhand der Figuren 4 bis 6 erläutert werden.

Im Zustand gemäß **Figur 4** sei das zu steuernde System, im vorliegenden Beispiel somit der Scheibenwischermotor 17 (vgl. **Figur 2**), ausgeschaltet. Der Drehknauf 1 befindet sich anhand des einstückig mit dem Drehknauf 1 verbundenen Anschlagsnockens 4 mechanisch an seinem linken Anschlag 2, entsprechend der "Aus"-Stellung des Scheibenwischers 17. Nun soll der Scheibenwischer 17 durch den Bediener bzw. Fahrer manuell eingeschaltet werden. Das manuelle Einschalten des Scheibenwischers 17 erfolgt durch rechtsgerichtetes Drehen am Drehknauf 1 bis zur Anlage des Anschlagsnockens 4 am rechten Anschlag 3, entsprechend der "Ein"-Stellung, vgl. **Figur 5****.** Die Bewegung des Drehknaufs 1 wird dabei gemäß der Darstellung in **Figur 2** über den Sensor 14 an die Steuerelektronik 15 gemeldet. Die Steuerelektronik 15 schaltet sodann den Scheibenwischermotor 17 ein.

Es ergibt sich die Situation gemäß **Figur 5**, der Drehknauf 1 befindet sich in der "Ein"-Stellung, der Scheibenwischer läuft. Wird nun beispielsweise im weiteren Verlauf das Fahrzeug abgesfellt, und der Fahrer verlässt das Fahrzeug, so wird der Scheibenwischer wie die meisten anderen elektrischen Verbraucher zunächst einmal in an sich bekannter Weise abgestellt. Nach Rückkehr des Fahrers zum Fahrzeug würde der Scheibenwischer jedoch normalerweise nach dem Starten des Fahrzeugs wieder anspringen, da sich der Betätigungsknauf 1 des Scheibenwischers nach wie vor in der mechanischen "Ein"-Stellung befinden würde. Dies ist jedoch zumeist unerwünscht, da sich die Witterungssituation oftmals zwischenzeitlich verändert hat, und da beim Losfahren ein für den Fahrer überraschend anspringender Scheibenwischer zudem ein Sicherheitsproblem darstellen kann.

Bei Vorhandensein einer Betätigungseinrichtung gemäß der Erfindung konnte allerdings durch die Steuerelektronik 15 beispielsweise das Abstellen des Motors, und/oder das Verlassen des Fahrzeugs durch den Fahrer, registriert werden. Um sodann ein unerwartetes Anspringen des Scheibenwischers beim nächsten Start des Fahrzeugs zu verhindern, schaltet die Steuerelektronik 15 den Scheibenwischermotor 17 daher komplett aus. Jedoch befindet sich der Drehknauf 1 nun nach wie vor in der mechanischen "Ein"-Stellung am rechten Anschlag 3. Bei einer konventionellen Betätigungseinrichtung mit diskreten Schaltstellungen könnte der Fahrer daher den zwischenzeitlich automatisch abgestellten Scheibenwischer nicht wie üblich durch Rechtsdrehen am Drehknauf 1 wieder einschalten, da sich der Drehknauf 1 ja nach wie vor am rechten Anschlag 3, und damit bereits in der mechanischen "Ein"-Stellung befände.

Diese Problematik wird erfindungsgemäß dadurch gelöst, dass die Steuerelektronik 15 gleichzeitig mit bzw. anschließend an das automatische Abschalten des Scheibenwischers 17 auch den Zahnkranz 9 mit den damit verbundenen Anschlägen 2, 3 im Uhrzeigersinn gerade so weit verdreht, dass sich der Drehknauf 1 anschließend nicht mehr am rechten Anschlag 3, sondern vielmehr wieder am linken Anschlag 2 befindet, ohne dass sich dabei jedoch die absolute Position des Drehknaufs 1 verändert hätte.

Es stellt sich somit nunmehr die Situation gemäß **Figur 6** ein, der Scheibenwischermotors 17 wurde (automatisch) ausgeschaltet, und der Drehknauf 1 befindet sich in der mechanisch korrekten "Aus"-Stellung-am linken Anschlag 3. Für den Fahrer ergibt sich die intuitiv sofort erfassbare Situation "Scheibenwischer ist aus, Einschalten wie immer durch Drehen am Knopf nach rechts".

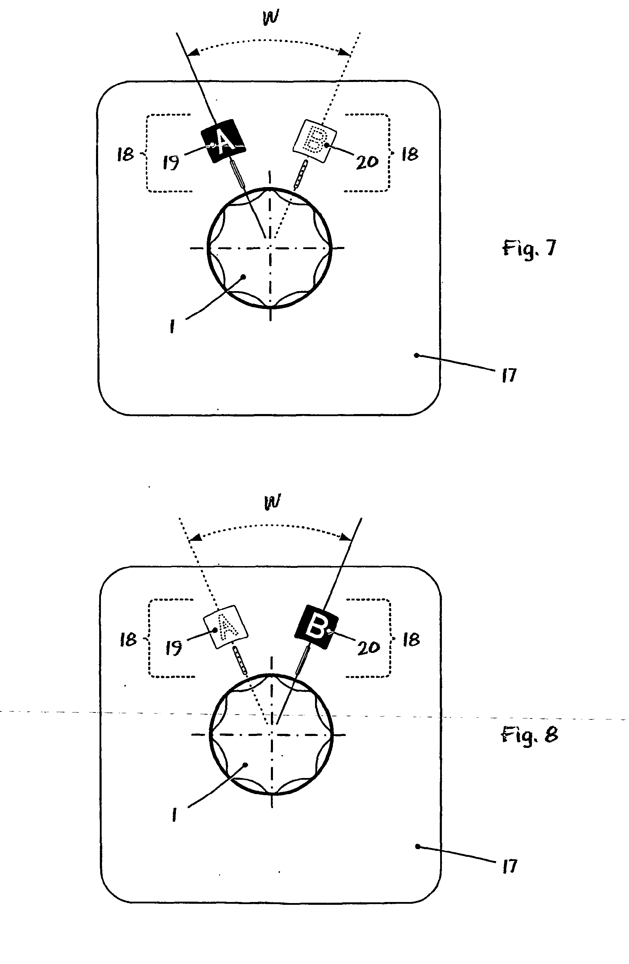

In den **Figur 7** und **8** ist eine Betätigungseinrichtung mit einem Drehknauf 1 analog **Figur 1** bis **6** dargestellt, wobei jedoch die Betätigungseinrichtung gemäß **Figur 7** und **8** mit einer Abdeckung 17 versehen ist, und zudem eine Einrichtung zur Anzeige des jeweiligen Schaltzustands aufweist. Die Anzeigeeinrichtung 18 umfasst beim vorliegenden Ausführungsbeispiel zwei diskrete Anzeigeelemente 19, 20.

Dank der Anzeigeeinrichtung 18 wird zusammen mit den anhand Figuren 1 bis 6 erläuterten Eigenschaften der erfindungsgemäßen Betätigungseinrichtung nun sogar die sichere, intuitive Logik und die unter allen Bedingungen unmittelbar verständliche, leichte Bedienbarkeit eines klassischen Knebelschalters denkbar vollständig nachgebildet. Denn zusätzlich zu den mittels Steuerelektronik 15 und Antrieb 9, 10, 11 verstellbaren Endanschlägen 2, 3 für den Drehknauf 1 (in Figuren 7 und 8 durch Abdeckung 17 verdeckt) wird durch die Anzeigeeinrichtung 18 mit den räumlich diskreten Anzeigeelementen 19 und 20 die tatsächliche momentane Schaltstellung des Drehknaufs 1 bzw. des damit gesteuerten Systems 17 auch visuell eindeutig signalisiert.

Übertragen auf das der Veranschaulichung halber gewählte Beispiel der Betätigung eines Scheibenwischers bedeutet dies in Bezug auf **Figur 7** und **8****,** dass der Scheibenwischer durch intuitives Rechts- bzw. Linksdrehen mit dem Drehknauf 1 ein- und ausgeschaltet werden kann, wobei taktil sowohl die Verrastung 5, 6 als auch die Endanschläge 2, 3, zudem aber auch noch die visuelle Anzeigeeinrichtung 18, 19, 20 den Schaltzustand des Scheibenwischers signalisieren. So ist in **Figur 7** der Scheibenwischer ausgeschaltet, der Drehknauf 1 befindet sich mechanisch am linken Anschlag (Anschlag 2 gemäß **Figur** 1 bis **6**) und das Anzeigeelement 19 ist aktiviert, beispielsweise mittels einer Leuchtdiode beleuchtet.

Wird nun der Scheibenwischer, beispielsweise bei aufkommenden Regen mittels eines Regensensors automatisch aktiviert, so verändert das Steuergerät 15 die Situation am Drehknauf 1 ebenfalls automatisch dergestalt, dass nunmehr die Situation gemäß **Figur 8****,** vorliegt. Nun ist das Anzeigeelement 20 aktiviert und visualisiert somit den momentan in Betrieb befindlichen Scheibenwischer. Zusätzlich wurden vom Steuergerät 15 (vgl. **Figur 2** und **3**) auch die beiden Endanschläge 2, 3 des Drehknaufs 1 so verstellt, dass der Drehknauf 1 sich nunmehr korrekt am rechten mechanischen Anschlag befindet, ohne dass sich die Absolutposition des Drehknaufs 1 dabei jedoch verändert hätte.

Dies bedeutet mit anderen Worten, dass der Fahrer auch den automatisch aktivierten Scheibenwischer wie gewohnt manuell durch eine Linksdrehung am Drehknauf 1 abschalten kann. Hierbei wechselt die Anzeigeeinrichtung 18 die Aktivierung der Anzeigeelemente 19 bzw. 20 dergestalt, dass nach dem manuellen Ausschalten des Scheibenwischers wieder Anzeigeelement 19 aktiviert ist, womit sich erneut die Situation gemäß **Figur 7** einstellt. Die Position der Anschläge 2 und 3 bleibt bei dieser manuellen Betätigung des Drehknaufs 1 unverändert.

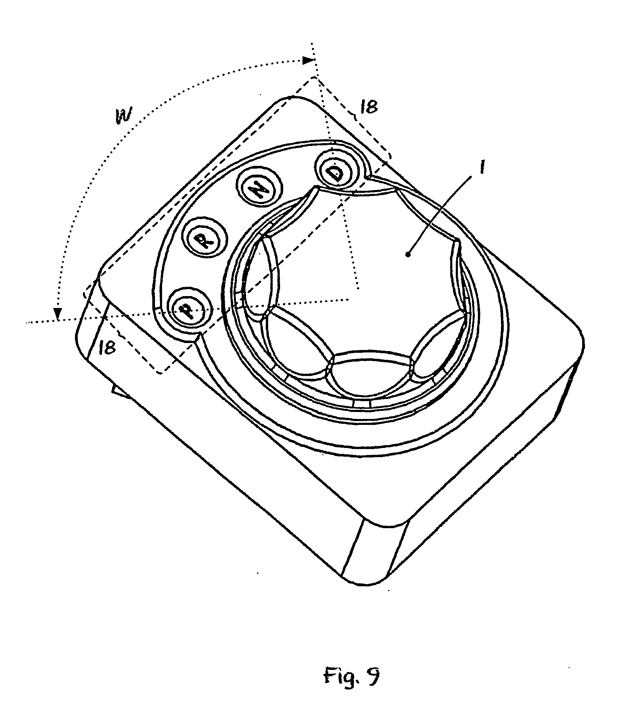

**Figur 9** zeigt in isometrischer Darstellung eine weitere Ausführungsform einer erfindungsgemäßen Betätigungseinrichtung. Die Betätigungseinrichtung gemäß **Figur 9** dient der Steuerung eines shift-by-wire-fähigen Schaltgetriebes, beispielsweise des Automatikgetriebes eines Kraftfahrzeugs. Man erkennt auf Anhieb, dass die Betätigungseinrichtung gemäß **Figur 9** im Unterschied zu der Betätigungseinrichtung gemäß

**Figur** 1 bis **8** **nicht** nur zwei Schaltstellungen, sondern deren vier aufweist. Die Schaltstellungen der Betätigungseinrichtung gemäß **Figur 9** sind in der üblichen Weise mit P (Parksperre), R (Rückwärtsgang), N (Neutralstellung, Leerlauf) und D (Dauerstellung) bezeichnet.

Auch beim Kraftfahrzeuggetriebe, insbesondere bei einem automatisierten Schaltgetriebe, treten Situation auf, in denen sich nicht nur die momentan eingelegte Getriebestufe automatisch verändert, sondern in denen vielmehr sogar der übergeordnete Schaltzustand des Getriebes selbst verändert wird - sprich, in denen das Getriebe-Steuergerät selbsttätig beispielsweise eine der Schaltstellungen P, R, N, D einlegt. So bietet sich beispielsweise die Möglichkeit, dass ein shift-by-wire-fähiges Schaltgetriebe die Position P (Parksperre) automatisch stets dann einlegt, wenn der Zündschlüssel abgezogen wird, oder wenn der Fahrer das Fahrzeug verlässt, um damit die Gefahr eines Wegrollens des Kraftfahrzeugs zu verhindern.

In einem solchen Fall würde sich jedoch das Betätigungselement des Fahrzeuggetriebes, bzw. ein vorhandener Getriebe-Schalthebel, unverändert in der zuletzt vom Fahrer gewählten Position (beispielsweise "Neutral") befinden, während sich aber das Getriebe tatsächlich in der automatisch eingelegten Stellung "Parksperre" befände.

Bei der Betätigungseinrichtung gemäß **Figur 9** erfolgt in einem solchen Fall durch das Steuergerät 15 nun automatisch eine Anpassung sowohl der Endanschläge 2, 3 für den Drehknauf 1 als auch der Anzeige 18 der momentan tatsächlich eingelegten Fahrstufe. Da der Drehknauf 1 selbst keinerlei Form- oder Farbmarkierungen aufweist, aus denen auf den Schaltzustand des Getriebes geschlossen werden könnte, kann diese Anpassung der Betätigungseinrichtung erfolgen, ohne dass dabei die Position des Drehknaufs 1 selbst verändert werden müsste. Dennoch befindet sich der Drehknauf 1 im Anschluss an die automatische Anpassung der Betätigungseinrichtung durch das Steuergerät 15 mechanisch korrekt an seinem linken Endanschlag 2, und es wird durch Aufleuchten des linken Anzeigeelements "P" der tatsächlich vorliegende Schaltzustand des Getriebes zutreffend angezeigt.

Auch für den Beispielfall einer unzulässigen Bedienung (Fahrer wählt beispielsweise Fahrstufe "R", während das Fahrzeug noch nicht zum Stillstand gekommen ist) tritt keine Divergenz zwischen dem tatsächlichen Systemzustand und dem Zustand der Betätigungseinrichtung auf. Dreht der Fahrer den Drehknauf 1 in einem solchen Fall beispielsweise während der Fahrt von Position "D" auf Position "R" oder "P", so wird dieser Schaltvorgang vom Getriebe nicht ausgeführt. Stattdessen verbleibt vielmehr das Getriebe in der Fahrstufe "D" und dies wird auch von der Anzeigeeinrichtung 18 angezeigt. Vom Steuergerät 15 wird in einem solchen Fall lediglich die Position der beiden mechanischen Endanschläge 2, 3 so angepasst, dass sich der Drehknauf auch nach der Fehlbetätigung wieder an seinem rechten Anschlag (in der Fahrstufe "D") befindet.

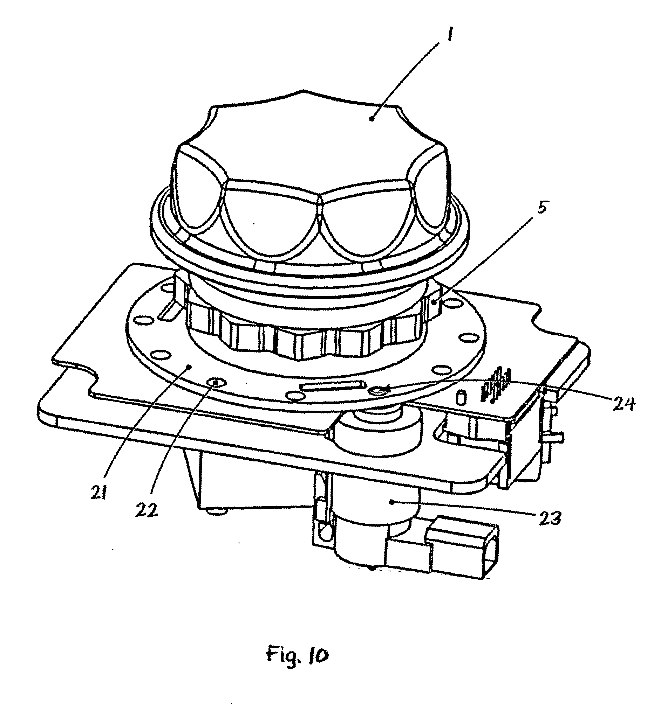

**Figur 10** schließlich zeigt die Betätigungseinrichtung gemäß **Figur 9**, wobei in,der Darstellung der Figur **10** u.a. das Gehäuse der Betätigungseinrichtung entfernt wurde. Man erkennt, dass die Rastkontur der Betätigungseinrichtung gemäß **Figur 9** und **10** die Umdrehung des Drehknaufs 1 über den Gesamtdrehwinkel von 360 Grad in eine Anzahl von gleichmäßigen Raststellungen aufteilt. Vorliegend weist die Rastkontur 5 der Betätigungseinrichtung gemäß Figuren 9 und 10 zwölf Rastpositionen auf, wobei die (in Figuren 9 und 10 nicht dargestellten) Endanschläge 2, 3 analog der Darstellung der Figuren 1 bis 6 die tatsächlich mögliche Drehbewegung des Drehknaufs 1 jeweils auf den Winkelbereich W begrenzen und somit lediglich die Auswahl der vier nebeneinander liegenden Schaltpositionen P, R, N und D zulassen.

Außer Betätigungsknopf 1 und Rastkontur 5 erkennt man in **Figur 10**, dass die Betätigungseinrichtung gemäß **Figur 9** und **10** eine zusätzliche Sperrscheibe 21 umfasst, wobei die Sperrscheibe 21 drehfest mit Rastkontur 5 und Drehknauf 1 verbunden ist. Die Sperrscheibe 21 besitzt eine Anzahl von Bohrungen 22, die entlang ihres Umfangs verteilt angeordnet sind. Die Betätigungseinrichtung umfasst ferner einen Sperrmagneten 23 mit Sperrstößel 24, wobei der Sperrstößel 24 in eine der Bohrungen 22 eingreifen und die Betätigung des Drehknaufs 1 somit blockieren kann.

Der Sperrmagnet 23 und der Sperrstößel 24 sind dabei so eingerichtet, dass der Sperrstößel 24 den Drehknauf 1 im stromlosen Zustand des Sperrmagnets 23 blockiert, beispielsweise um dem Fahrer so zu signalisieren, dass Schaltbefehle, z. B. wegen eines ausgefallenen Stromkreises, derzeit nicht an das Fahrzeuggetriebe weitergegeben werden können. Weitere Beispiele für den Einsatz des Sperrmagnets sind bei einem automatisierten Fahrzeuggetriebe die Schaltstellungen "P" und "N", aus denen aus Sicherheitsgründen nur bei getretener Bremse herausgeschaltet werden kann.

Im Ergebnis wird somit deutlich, dass dank der Erfindung eine Betätigungseinrichtung für elektrisch bzw. elektronisch gesteuerte technische Systeme geschaffen wird, die eine ebenso intuitive, sichere, leicht verständliche und fehlerfreie Betätigung des technischen Systems ermöglicht, wie dies beispielsweise bei diskreten Rastpositionen aufweisenden mechanischen Betätigungselementen der Fall ist. Gleichzeitig wird dank der Erfindung eine eindeutige, intuitiv erfassbare, insbesondere taktile Rückmeldung des Systemzustands realisiert.

Die Erfindung leistet damit einen ganz wesentlichen Beitrag zur Verbesserung der Ergonomie, Sicherheit und Bedienbarkeit von komplexen technischen Systemen, insbesondere beim konkreten Anwendungsfall der Bedienung diverser technischer Systeme am Kraftfahrzeug.

### Bezugszeichenliste

- 1: Betätigungselement
- 2: Linker Anschlag
- 3: Rechter Anschlag
- 4: Anschlagsnocken
- 5: Rastkontur
- 6: Raststück
- 7: Druckfeder
- 8: Ringförmiger Wulst
- 9: Zahnkranz
- 10: Getriebeschnecke
- 11: Elektrischer Antrieb
- 12: Drehachse
- 13: Welle
- 14: Drehwinkelsensor
- 15: Steuerelektronik
- 16: Drehwinkelsensor
- 17: Gehäuseabdeckung
- 18: Anzeigeeinrichtung
- 19: Anzeigeelemente
- 20: Anzeigeelement
- 21: Sperrscheibe
- 22: Bohrungen
- 23: Sperrmagnet
- 24: Sperrstößel

## Patentansprüche

1. Betätigungseinrichtung für ein technisches System (17), beispielsweise für ein shift-by-wire-Fahrzeuggetriebe, die Betätigungseinrichtung aufweisend ein Betätigungselement (1) mit zumindest zwei Schaltstellungen,
wobei das Betätigungselement (1) für sich genommen unbegrenzt rotierbar ist und die Betätigungseinrichtung zumindest eine von dein Betätigungselement (1) unabhängig gesteuert verstellbare Anschlageinrichtung (2, 3) zur Begrenzung des Drehwinkels (W) des Betätigungselements (1) umfasst wobei das Betätigungselement (1) und die Anschlageinrichtung (2, 3) um eine gemeinsame Drehachse (12) verschwenkbar angeordnet sind,
**dadurch gekennzeichnet, dass**
die Anschlageinrichtung (2, 3) für beide Drehrichtungen des Betätigungselements (1) jeweils einen Anschlag (2, 3) aufweist, welche einen Drehwinkelbereich (W) für das Betätigungselement (1) bilden, wobei der Drehwinkelbereich (W) in Bezug auf das Betätigungselement (1) in beliebigen Winkelstellungen positionierbar ist.

2. Betätigungseinrichtung nach Anspruch 1,
**dadurch gekennzeichnet,**
**dass** das Betätigungselement (1) im Wesentlichen rotationssymmetrisch ist.

3. Betätigungseinrichtung nach Anspruch 1 oder 2,
**dadurch gekennzeichnet,**
**dass** das Betätigungselement (1) eine Mehrzahl von Rastpositionen aufweist.

4. Betätigungseinrichtung nach Anspruch 3,
**dadurch gekennzeichnet,**
**dass** die Rastpositionen gleichmäßig auf eine volle Umdrehung des Betätigungselements (1) verteilt sind.

5. Betätigungseinrichtung nach Anspruch 1,
**dadurch gekennzeichnet,**
**dass** die beiden Anschläge (2, 3) miteinander verbunden sind.

6. Betätigungseinrichtung nach Anspruch 1,
**dadurch gekennzeichnet,**
**dass** die beiden Anschläge (2, 3) separat steuerbar bzw. verstellbar sind.

7. Betätigungseinrichtung nach einem der Ansprüche 1 bis 6,
**dadurch gekennzeichnet,**
**dass** der Antrieb der Anschlageinrichtung (2, 3) ein Schneckengetriebe (10) umfasst.

8. Betätigungseinrichtung nach einem der Ansprüche 1 bis 6,
**dadurch gekennzeichnet,**
**dass** der Antrieb der Anschlageinrichtung über ein Stirnradgetriebe erfolgt, wobei der Antrieb eine Regelungseinrichtung zur Erzeugung eines Gegendrehmomentes umfasst.

9. Betätigungseinrichtung nach einem der Ansprüche 1 bis 6,
**dadurch gekennzeichnet,**
**dass** die Anschlageinrichtung (2, 3) durch einen direkt auf das Betätigungselement (1) wirkenden Getriebemotor gebildet ist, wobei die Steuerung des Getriebemotors eine Regelungseinrichtung zur Erzeugung eines Gegendrehmoments umfasst.

10. Betätigungseinrichtung nach einem der Ansprüche 1 bis 9,
**dadurch gekennzeichnet,**
**dass** die Betätigungseinrichtung mit einer separaten Anzeigeeinrichtung verbunden ist.

11. Betätigungseinrichtung nach einem der Ansprüche 1 bis 9,
**dadurch gekennzeichnet,**
**dass** die Betätigungseinrichtung eine Anzeigeeinrichtung (18) umfasst.

12. Betätigungseinrichtung nach Anspruch 10 oder 11,
**dadurch gekennzeichnet,**
**dass** die Anzeigeeinrichtung für jede Schaltstellung ein diskretes Anzeigeelement (19, 20) aufweist.

13. Betätigungseinrichtung nach Anspruch 11 und 12,
**dadurch gekennzeichnet,**
**dass** die Abstände zwischen den diskreten Anzeigeelementen (19, 20) mit der Winkeldifferenz zwischen den Rastpositionen des Drehknaufs (1) korrespondieren.

14. Betätigungseinrichtung nach einem der Ansprüche 1 bis 13,
**dadurch gekennzeichnet,**
**dass** die Betätigungseinrichtung eine steuerbare Sperreinrichtung (21, 22, 23, 24) zur Blockierung des Betätigungselements (1) umfasst.

15. Betätigungseinrichtung nach einem der Ansprüche 1 bis 14,
**dadurch gekennzeichnet,**
**dass** die Betätigungseinrichtung eine mechanische Entriegelung zur Überwindung der Anschläge (2, 3) der Anschlageinrichtung und/oder zur Überwindung der Sperreinrichtung (21, 22, 23, 24) umfasst.

## Claims

1. Actuating device for a technical system (17), e.g. for a shift-by-wire vehicle transmission, the actuating device including an actuating element (1) with at least two gearshift positions,
the actuating element (1) in itself being rotatable without limit, and the actuating device including at least one limit stop device (2, 3) which is adjustable under control independently of the actuating element (1) to limit the angle of rotation (W) of the actuating element (1), and the actuating element (1) and the limit stop device (2, 3) being arranged so that they can pivot around a common axis of rotation (12),
**characterized in that**
the limit stop device (2, 3) has a limit stop (2, 3) for each of the two directions of rotation of the actuating element (1), said limit stops forming an angle of rotation range (W) for the actuating element (1), it being possible to position the angle of rotation range (W) in arbitrary angular positions relative to the actuating element (1).

2. Actuating device according to Claim 1,
**characterized in that**
the actuating element (1) is essentially rotationally symmetrical.

3. Actuating device according to Claim 1 or 2,
**characterized in that**
the actuating element (1) has multiple locking positions.

4. Actuating device according to Claim 3,
**characterized in that**
the locking positions are distributed evenly over a full rotation of the actuating element (1).

5. Actuating device according to Claim 1,
**characterized in that**
the two limit stops (2, 3) are connected to each other.

6. Actuating device according to Claim 1,
**characterized in that**
the two limit stops (2, 3) can be controlled and/or adjusted separately.

7. Actuating device according to any one of Claims 1 to 6,
**characterized in that**
the drive of the limit stop device (2, 3) includes a worm gear (10).

8. Actuating device according to any one of Claims 1 to 6,
**characterized in that**
the drive of the limit stop device takes place via a spur gear, the drive including a regulating device to generate a counter-torque.

9. Actuating device according to any one of Claims 1 to 6,
**characterized in that**
the limit stop device (2, 3) is in the form of a gear motor which acts directly on the actuating element (1), the control of the gear motor including a regulating device to generate a counter-torque.

10. Actuating device according to any one of Claims 1 to 9,
**characterized in that**
the actuating device is connected to a separate display device.

11. Actuating device according to any one of Claims 1 to 9,
**characterized in that**
the actuating device includes a display device (18).

12. Actuating device according to Claim 10 or 11, **characterized in that**
the display device has a discrete display element (19, 20) for each gearshift position.

13. Actuating device according to Claims 11 and 12, **characterized in that**
the distances between the discrete display elements (19, 20) correspond to the angular difference between the locking positions of the rotary knob (1).

14. Actuating device according to any one of Claims 1 to 13,
**characterized in that**
the actuating device includes a controllable blocking device (21, 22, 23, 24) to block the actuating element (1).

15. Actuating device according to any one of Claims 1 to 14,
**characterized in that**
the actuating device includes a mechanical release to overcome the limit stops (2, 3) of the limit stop device, and/or to overcome the blocking device (21, 22, 23, 24).

## Revendications

1. Dispositif d'actionnement pour un système technique (17), par exemple pour une transmission de véhicule « shift-by-wire », le dispositif d'actionnement comportant un élément d'actionnement (1) présentant au moins deux positions de commutation, l'élément d'actionnement (1) pouvant tourner de manière illimitée en soi et le dispositif d'actionnement comprenant au moins un dispositif de butée (2, 3), pouvant être réglé par commande indépendamment de l'élément d'actionnement (1), pour délimiter l'angle de rotation (W) de l'élément d'actionnement (1). L'élément d'actionnement (1) et le dispositif de butée (2, 3) sont disposés autour d'un axe de rotation commun (12) de manière à pouvoir pivoter. Le dispositif d'actionnement se caractérise en ceci que le dispositif de butée (2, 3) comporte une butée (2, 3) pour les deux sens de rotation de l'élément d'actionnement (1), butées qui représentent une plage d'angle de rotation (W) pour l'élément d'actionnement (1), la plage de l'angle de rotation (W) pouvant être placée dans n'importe quelle position angulaire par rapport à l'élément d'actionnement (1).

2. Dispositif d'actionnement selon la revendication 1, **caractérisé en ce que** l'élément d'actionnement (1) est sensiblement réalisé avec une symétrie de rotation.

3. Dispositif d'actionnement selon la revendication 1 ou 2, **caractérisé en ce que** l'élément d'actionnement (1) présente une pluralité de positions d'arrêt.

4. Dispositif d'actionnement selon la revendication 3, **caractérisé en ce que** les positions d'arrêt sont réparties de manière homogène sur une révolution complète de l'élément d'actionnement (1).

5. Dispositif d'actionnement selon la revendication 1, **caractérisé en ce que** les deux butées (2, 3) sont reliées l'une à l'autre.

6. Dispositif d'actionnement selon la revendication 1, **caractérisé en ce que** les deux butées (2, 3) peuvent être commandées ou réglées séparément.

7. Dispositif d'actionnement selon l'une quelconque des revendications 1 à 6, **caractérisé en ce que** l'entraînement du dispositif de butée (2, 3) comporte un engrenage à vis sans fin (10).

8. Dispositif d'actionnement selon l'une quelconque des revendications 1 à 6, **caractérisé en ce que** l'entraînement du dispositif de butée se fait par le biais d'un engrenage cylindrique, l'entraînement comportant un dispositif de réglage pour la génération d'un couple antagoniste.

9. Dispositif d'actionnement selon l'une quelconque des revendications 1 à 6, **caractérisé en ce que** le dispositif de butée (2, 3) est constitué d'un motoréducteur agissant directement sur l'élément d'actionnement (1), la commande du motoréducteur comportant un dispositif de réglage pour la génération d'un couple antagoniste.

10. Dispositif d'actionnement selon l'une quelconque des revendications 1 à 9, **caractérisé en ce que** le dispositif d'actionnement est relié à un dispositif d'affichage séparé.

11. Dispositif d'actionnement selon l'une quelconque des revendications 1 à 9, **caractérisé en ce que** le dispositif d'actionnement comprend un dispositif d'affichage (18).

12. Dispositif d'actionnement selon la revendication 10 ou 11, **caractérisé en ce que** le dispositif d'affichage comporte, pour chaque position de commutation, un élément d'affichage discret (19, 20).

13. Dispositif d'actionnement selon la revendication 11 et 12, **caractérisé en ce que** les distances entre les éléments d'affichage discrets (19, 20) correspondent à la différence angulaire entre les positions d'arrêt du bouchon rotatif (1).

14. Dispositif d'actionnement selon l'une quelconque des revendications 1 à 13, **caractérisé en ce que** le dispositif d'actionnement comporte un dispositif de blocage (21, 22, 23, 24) pouvant être commandé pour bloquer l'élément d'actionnement (1).

15. Dispositif d'actionnement selon l'une quelconque des revendications 1 à 14, **caractérisé en ce que** le dispositif d'actionnement comporte un déverrouillage mécanique pour débloquer les butées (2, 3) du dispositif de butée et/ou pour débloquer le dispositif de blocage (21, 22, 23, 24).
